# EUROPÄISCHE PATENTSCHRIFT

(11) **EP 2 509 788 B1**
(45) Veröffentlichungstag und Bekanntmachung des Hinweises auf die Patenterteilung: **04.12.2019**
(21) Anmeldenummer: 10787136.0
(22) Anmeldetag: 08.12.2010
(51) Int. Cl.: B32B 27/08, B32B 27/30, B32B 27/36, B32B 27/40, C08L 51/04, C08L 55/02, C08L 67/02, C08L 69/00

(54) **VERBUNDBAUTEILE MIT VERBESSERTER HAFTUNG AUS POLYCARBONAT- / POLYESTERZUSAMMENSETZUNGEN UND POLYURETHAN**
COMPOSITE COMPONENTS FROM POLYCARBONATE / POLYESTER COMPOSITIONS AND POLYURETHANE, HAVING IMPROVED INTERLAYER ADHESION
ÉLÉMENTS COMPOSITES À ADHÉRENCE AMÉLIORÉE RÉALISÉS À PARTIR DE COMPOSITIONS DE POLYCARBONATE / POLYESTER ET DE POLYURÉTHANE

(30) Priorität: 08.12.2009 DE 102009057138; 15.12.2009 DE 102009058182
(43) Veröffentlichungstag der Anmeldung: 17.10.2012
(73) Patentinhaber: Covestro Deutschland AG, 51373 Leverkusen (DE)
(72) Erfinder: ECKEL, Thomas, 41540 Dormagen (DE); SEIDEL, Andreas, 41542 Dormagen (DE); FRANZ, Uli, 42659 Solingen (DE)
(74) Vertreter: Levpat
(86) Internationale Anmeldenummer: PCT/EP2010/069119
(87) Internationale Veröffentlichungsnummer: WO 2011/070044

(56) Entgegenhaltungen:
- WO-A1-2006/072366
- WO-A1-2011/015286
- US-A1- 2008 230 938

## Beschreibung

Gegenstand der vorliegenden Erfindung sind Verbundbauteile mit hoher Zähigkeit und stabiler Verbundhaftung, wobei diese einen strukturgebenden Träger aus einer Polycarbonat- und/oder Polyesterzusammensetzung mit einer guten Verarbeitbarkeit und mindestens eine Polyurethanschicht enthalten, sowie deren Verwendung und ein Verfahren zu deren Herstellung.

WO 2006/072366 A1 beschreibt ein Verfahren zum Formen und Beschichten eines Substrats in einem Formwerkzeug mit wenigstens zwei Kavitäten. Das Verfahren umfasst die Schritte:
a) Formen eines Substrats in einer ersten Kavität des Formwerkzeugs,
b) das Einbringen des im vorangegangenen Schritt hergestellten Substrats in eine zweite Kavität des Formwerkzeugs und
c) Beschichten des Substrats in der zweiten Kavität mit einem Lack, wobei das Beschichten unter erhöhtem Druck erfolgt.

Beispielhaft und bevorzugt werden Polyurethanlacke und PC+ABS-Substrate (Polycarbonat + Acrylnitril-Butadien-Styrol-Substrate) genannt. Über den Einfluss der Trägermaterialzusammensetzung auf die Hafteigenschaften des Materialverbundes werden in dieser Anmeldung keine Hinweise gegeben.

DE 10 2006 048 252 B3 offenbart ein Verfahren zur Herstellung eines Verbundbauteils, insbesondere umfassend ein Spritzgussteil sowie ein Polyurethan-Element, mit den Schritten
a) Herstellen eines Trägerbauteils,
b) Verbringen oder Umsetzen des Trägerbauteils in eine geöffnete Kavität eines Werkzeugs,
c) Schließen des Werkzeugs bis auf eine vorbestimmte Position, wobei eine vergrößerte Kavität mit einer ersten Größe geschaffen ist,
d) Erzeugen eines Unterdrucks in der vergrößerten Kavität erster Größe,
e) Einfüllen eines Flutungsmaterials in die vergrößerte Kavität und
f) Durchführen eines Prägeschrittes gleichzeitig mit dem Einfüllen und/oder anschließend an das

Einfüllen des Flutungsmaterials, wobei die Kavität zumindest geringfügig verkleinert wird.

Zur Verbesserung der Verbundhaftung wird hier Aktivierung der Oberfläche des Thermoplasten durch Abflammen, Plasmabeaufschlagung oder Gas beschrieben. Über den Einfluss der Trägermaterialzusammensetzung auf die Hafteigenschaften des Materialverbundes, werden in dieser Veröffentlichung keine Hinweise gegeben.

DE 10 2006 033 059 A1 offenbart ein Verfahren zur Herstellung von Kunststoff-Innenraumteilen. Hierbei wird in einem ersten Schritt der Träger in einem ersten Werkzeug geformt, wobei das erste Werkzeug danach mindestens teilweise durch ein zweites Werkzeug ersetzt wird und anschließend in einem zweiten Schritt die Deckschicht auf dem Träger geformt wird. Dabei kommt als Trägermaterial eine Hartkomponente, z.B. PA+ABS- Blends (Polyamid+Acrylnitril-Butadien-Styrol) oder PC+ABS-Blends (Polycarbonat + Acrylnitril-Butadien-Styrol), und als Deckschicht eine Weichkomponente, vorzugsweise Polyurethanschaum, zum Einsatz. Über den Einfluss der Zusammensetzung der Trägermaterialien auf die Verbundeigenschaften der so hergestellten Bauteile werden in der Anmeldung keine Hinweise gegeben. Vielmehr wird in DE 10 206 033 059 A1 ebenfalls zur Verbesserung der Haftung vorgeschlagen, die Oberfläche durch Primer oder Laser-, Corona-, oder Plasmabehandlung vorzubereiten.

WO 99/20464 offenbart Verbunde aus wenigstens zwei unterschiedlichen unmittelbar miteinander verbundenen Kunststoffmaterialien, wobei a) ein thermoplastisches Polymer oder eine thermoplastische Mischung von Polymeren ist, die wenigstens eine polare Verbindung aus wenigstens einem der Metalle der 1. bis 5. Hauptgruppe oder der 1. bis 8. Nebengruppe des Periodensystems als feinstverteiltes anorganisches Pulver enthalten und b) Polyurethan ist, welcher als Schaum, Lack oder als kompaktes Material vorliegt. Für den Verbund wird keine Haftvermittlerschicht benötigt. Auf den Einfluss der Trägermaterialzusammensetzung hinsichtlich ABS- und Kautschukgehalt auf die Hafteigenschaften des Materialverbundes, werden in dieser Veröffentlichung keine Hinweise gegeben.

DE 101 09 226 A1 offenbart eine Polycarbonat-Zusammensetzung entaltend a) aromatisches Polycarbonat und/oder Polyestercarbonat, b) Pfropfpolymerisat und c) Copolymerisat aus Styrol und einem carboxylgruppenhaltigen Monomeren, wobei das Copolymerisat ein mittleres Molekulargewicht Mw von >= 10.500 g/mol aufweist, und wobei das Copolymere ein oder mehrere Vinylmonomere enthalten kann. Komponente C ist bevorzugt ein Copolymerisat aus Styrol und Maleinsäureanhydrid. DE 101 09 226 A1 offenbart weiterhin Verbundbauteile enthaltend mindestens eine erste Schicht (1) und eine zweite Schicht (2), worin Schicht (1) mindestens eine Polycarbonat-Zusammensetzung (wie unter a, b und c aufgezeigt) aufweist und Schicht (2) mindestens ein Polyurethan enthält. Der Verbund zeichnet sich dadurch aus, dass die Abnahme der Schaumhaftung zwischen Schicht (1) und Schicht (2) nach doppeltem Klimawechseltest (KWT) höchstens 35% beträgt. Über den Einfluss der Trägermaterialzusammensetzung hinsichtlich ABS- und Kautschukgehalt auf die Hafteigenschaften des Materialverbundes, werden in dieser Veröffentlichung keine Hinweise gegeben.

US 2008/230938 A1 offenbart eine Verbundschichtplatte oder -folie und eine Trägerschicht aus Kunststoff, wobei die Verbundschichtplatte oder -folie umfasst: Eine Substratschicht, enthaltend 1 - 99 Gew.-% eines kautschukelastischen Pfropfcopolymerisats als Komponente A, 1 - 99 Gew.-% eines oder mehrerer harter Copolymerisate, enthaltend Einheiten, die sich von vinylaromatischen Monomeren ableiten, als Komponente B, 0 - 80 Gew.-% Polycarbonate als Komponente C, und 0 - 50 Gew.-% faser- oder teilchenförmige Füllstoffe oder deren Gemische als Komponente D, und eine Deckschicht aus aliphatischem thermoplastischem Polyurethan.

Die Aufgabe der vorliegenden Erfindung bestand darin, alternative Verbundbauteile mit hoher Zähigkeit und verbesserter Verbundhaftung bereitzustellen, wobei diese einen strukturgebenden Träger aus einer Polycarbonat- und/oder Polyesterzusammensetzung mit guter Verarbeitbarkeit und mindestens eine Polyurethanschicht enthalten, deren Verwendung, sowie Verfahren zur Herstellung dieser Verbundbauteile.

Die Polyurethanschicht kann dabei beispielsweise zur Verbesserung der Oberflächeneigenschaften, der Haptik, der Optik, der Geräusch- und Wärmedämmung der Verbundbauteile dienen.

Die Aufgabe der vorliegenden Erfindung wird gelöst durch Verbundbauteile gemäß Anspruch 1, das Verfahren gemäß Anspruch 10 und die Verwendung gemäß Anspruch 12. weitere Ausführungsformen sind durch die abhängigen Ansprüche umfasst.

Die thermoplastische Zusammensetzung ist bevorzugt gekennzeichnet durch einen Quotienten Q=[B]/[K_{B}] von <2.

Der Kautschukgehalt der Komponente B [K_{B}] beträgt bevorzugt 25,0 bis 80,0 Gew.-Teile, weiter bevorzugt 25,0 bis 50,0 Gew.-Teile, insbesondere 30,0 bis 45,0 Gew.-Teile.

Der Gesamtkautschukgehalt sowie der Kautschukgehalt [K], jeweils bezogen auf die Summe der Komponenten A und B, beträgt mindestens 12 Gew.-Teile, bevorzugt mindestens 13 Gew.-Teile, und besonders bevorzugt mindestens 14 Gew.-Teile.

Der Gesamtkautschukgehalt sowie der Kautschukgehalt [K], jeweils bezogen auf die Summe der Komponenten A und B, beträgt bevorzugt maximal 35 Gew.-Teile, weiter bevorzugt maximal 30 Gew.-Teile, besonders bevorzugt 25 Gew.-Teile, wobei die Bereiche aus den zuvor genannten Ober- und Untergrenzen frei kombiniert werden können.

Der Gesamtkautschukgehalt sowie der Kautschukgehalt [K] jeweils bezogen auf die Summe der Komponenten A und B beträgt bevorzugt 12 - 35 Gew.-Teile, weiter bevorzugt von 13 - 30 Gew.-Teile und besonders bevorzugt 14 bis 25 Gew.-Teile.

Die Polyurethanschicht kann dabei beispielsweise ein PU-Lack, ein PU-Schaum oder aber eine kompakte PU-Haut darstellen mit Polyurethanschichtdicken von beispielsweise 1 µm bis zu 20 cm. In einer bevorzugten Ausführungsform handelt es sich bei der Polyurethanschicht um einen Lack mit einer Schichtdicke von 1 - 1000 µm.

In einer weiteren bevorzugten Ausführungsform handelt es sich bei der Polyurethanschicht um eine kompakte Haut mit einer Schichtdicke von 1 mm - 10 mm.

In einer weiteren bevorzugten Ausführungsform handelt es sich bei der Polyurethanschicht um einen Schaum mit einer Schichtdicke von 4 mm - 20 cm.

Die Verbundbauteile können grundsätzlich in jeder bekannten Weise hergestellt werden.

Bevorzugt wird die Polyurethanschicht hergestellt durch Auspolymerisation eines reaktiven Polyurethanrohstoffgemischs enthaltend
- mindestens eine Polyisocyanat-Komponente,
- mindestens eine polyfunktionelle H-aktive Verbindung, und
- optional mindestens ein Polyurethan-Additiv und/oder Prozesshilfsstoff
in direktem Kontakt mit dem zuvor aus der thermoplastischen Zusammensetzung geformten und erstarrten Träger.

Das Trägerbauteil kann beispielsweise aus der thermoplastischen PC+ABS-Zusammensetzung vorgefertigt und darauf das reaktive Polyurethanrohstoffgemisch aufgebracht und ausreagiert werden. Je nach Reaktivität der Polyurethanreaktionskomponenten können diese bereits vorgemischt sein oder während des Auftragens in bekannter Weise vermischt werden. Das Auftragen kann unter anderem durch Sprühen, Rakeln oder Kalandrieren erfolgen.

Es ist aber auch möglich, die erfindungsgemäßen Verbunde durch Coextrusion nach bekannten Methoden herzustellen.

Für den Fall, dass geschäumte Verbunde hergestellt werden sollen, kann in an sich bekannter Weise das Reaktionsgemisch in eine Form enthaltend das vorab geformte und erstarrte Trägerbauteil eingetragen werden. Optional kann die Form auch eine weitere Dekorschicht (oft "Haut" genannt) aus z.B. Polyvinylchorid (PVC), thermoplastischen Polyolefinen (TPO), thermoplastischen Polyurethan (TPU) oder Polyurethansprühhaut enthalten. In der Form schäumt das schäumfähige Reaktionsgemisch in Kontakt mit dem Trägerbauteil und gegebenenfalls der Dekorschicht auf und bildet das Verbundbauteil. Die Formverschäumung kann dabei so durchgeführt werden, dass das Verbundbauteil an seiner Oberfläche eine Zellstruktur aufweist. Sie kann aber auch so durchgeführt werden, dass das Verbundbauteil eine kompakte Haut und einen zelligen Kern aufweist (Integralschaumstoffe). Die Polyurethankomponenten können mit Hockdruck- oder Niederdruckmaschinen in die Form eingebracht werden. Polyurethanschaumstoffe können auch als Block-Schaumstoff hergestellt werden.

Die Herstellung von Polyurethan-Verbundkörpern kann auch in Sandwichbauweise erfolgen. Das Verfahren kann dabei sowohl als Depot-, oder Hüllbauverfahren ausgestattet sein. Sowohl die Depotbauweise als auch die Hüllbauweise sind an sich bekannt. Im Depotverfahren (Füllbauweise) werden zwei Halbschalen (z.B. Deckschichten aus Kunststoffen) vorgefertigt, in ein Werkzeug eingelegt und der Hohlraum zwischen den Schalen mit dem PUR-Schaum ausgeschäumt. In der Hüllbauweise wird ein Kern aus PUR-Schaum in einem Werkzeug vorgelegt und dann mit einem geeigneten Hüllmaterial, z.B. mit einem der genannten Thermoplasten, umhüllt. Bei der Herstellung der Sandwich-Verbundkörper ist die Hüllbauweise bevorzugt.

In einer bevorzugten Ausführungsform der Erfindung werden die Verbundbauteile herstellt durch ein Verfahren in dem
(i) in einem ersten Verfahrensschritt die Schmelze der thermoplastischen Zusammensetzung in eine erste Werkzeugkavität eingespritzt und nachfolgend abgekühlt wird,
(ii) in einem zweiten Verfahrensschritt die Kavität des Spritzgusswerkzeugs vergrößert und dadurch ein Spaltraum erzeugt wird,
(iii) im dritten Verfahrensschritt in den so resultierenden Spaltraum zwischen dem thermoplastischen Bauteil und der Werkzeugoberfläche der vergrößerten Kavität ein reaktives Polyurethanrohstoffgemisch enthaltend
   - mindestens eine Polyisocyanat-Komponente,
   - mindestens eine polyfunktionelle H-aktive Verbindung, und
   - optional mindestens ein Polyurethan-Additiv und/oder Prozesshilfsstoff gespritzt wird, wobei das Polyurethanrohstoffgemisch im direkten Kontakt mit der Oberfläche des thermoplastischen Trägers zu einer kompakten Polyurethanschicht oder zu einer Polyurethanschaumschicht auspolymerisiert, und
(iv) im vierten Verfahrensschritt das Verbundbauteil aus der Werkzeugkavität entformt wird.

In einer weiter bevorzugten Ausführungsform der Erfindung folgen die Verfahrensschritte (i) bis (iv) bei der Verbundbauteilherstellung unmittelbar aufeinander.

Durch die unmittelbare Abfolge der Verfahrensschritte wird verhindert, dass die Temperatur des Werkstücks während des Prozesses auf Raumtemperatur abkühlt. Hierdurch wird eine Reduktion der Herstellungszeiten und eine höhere Energieeffizienz des Gesamtverfahrens erreicht.

Die Verfahrensschritte (ii) und (iii) können unter Variation des Polyurethansystems mindestens einmal wiederholt werden, wobei nur auf einer oder beiden Seiten des Trägers ein oder mehrere Polyurethanschichten aufgebracht werden, so dass ein Verbundbauteil aus thermoplastischem Träger und mindestens zwei gleichen oder unterschiedlichen PU-Komponenten mit gegebenenfalls auch mehr als zweischichtigem Aufbau resultiert.

Vor dem Entformen des Werkstücks in den Schritten (ii) und (iv) wird das Werkstück bis zur Formstabilität abgekühlt.

Zur Erzeugung des Spaltraums in Verfahrensschritt (ii) kann entweder das Spritzgusswerkzeug geöffnet und nachfolgend eine Hälfte der Spritzgusswerkzeugkavität durch eine neue Hälfte mit größeren Hohlformmaßen ausgetauscht, oder das Bauteil von der ersten Werkzeugkavität in eine zweite, hinsichtlich seiner Hohlformmaße größeren Kavität desselben oder eines zweiten Werkzeugs umgesetzt, oder die erste Kavität um ein Spaltmaß geöffnet werden.

Das Umsetzen des Substrats im Verfahrensschritt (ii) kann nach bekannten Verfahren, wie sie beispielsweise beim Mehrfarbenspritzgießen angewendet werden, erfolgen. Typische Verfahren sind einerseits das Umsetzen mit Drehteller, Wendeplatte, Schiebekavität oder Indexplatte oder vergleichbare Verfahren, bei denen das Substrat auf einem Kern verbleibt. Verbleibt das Substrat zum Umsetzen auf dem Kern, hat dies den Vorteil, dass die Lage auch nach dem Umsetzen passgenau definiert ist. Andererseits sind aus dem Stand der Technik Verfahren zum Umsetzen eines Substrats bekannt, bei denen das Substrat, z.B. mit Hilfe eines Handhabungssystems, aus einer Kavität entnommen und in eine andere Kavität eingelegt wird. Das Umsetzen mit Entnahme des Substrats bietet größeren Gestaltungsspielraum bei der Beschichtung, z.B. bei der Generierung eines Umbugs oder maskierter Bereiche.

Bevorzugt sind Verbundbauteile bei denen der Quotient Q kleiner als 1,7 insbesondere kleiner als 1,5 ist.

Die bei der Herstellung der erfindungsgemäßen Verbundbauteile eingesetzten thermoplastischen Zusammensetzungen enthalten
A) 30,0 bis 64,9 Gew.-Teile, insbesondere 40,0 bis 64,9 Gew.-Teile, besonders bevorzugt 40,0 bis 55,0 Gew.-Teile, bezogen auf die Summe der Komponenten A und B, mindestens eines Polymers ausgewählt aus der Gruppe der aromatischen Polycarbonate, aromatischen Polyestercarbonate und aromatischen Polyester,
B) 35,1 bis 70,0 Gew.-Teile, insbesondere 35,1 bis 60,0 Gew.-Teile, besonders bevorzugt 45,0 bis 60,0 Gew.-Teile, bezogen auf die Summe der Komponenten A und B, mindestens eines kautschukmodifizierten Vinyl(co)polymerisats.

Komponente C wird bevorzugt in einem Anteil von 0 bis 20,0 Gew.-Teilen, insbesondere 0,1 bis 10,0 Gew.-Teilen, bezogen auf die Summe der Komponenten A bis C, eingesetzt.

Die bei der Herstellung der erfindungsgemäßen Verbundbauteile eingesetzten thermoplastischen Zusammensetzungen enthalten bevorzugt als Komponente A ein Gemisch aus mindestens einem aromatischen Polycarbonat und/oder Polyestercarbonat und mindestens einem aromatischen Polyester.

In einer bevorzugten Ausführungsform wird im ersten Verfahrensschritt eine thermoplastische Polymerzusammensetzung verwendet, die bei Raumtemperatur und besonders bevorzugt auch bei -30°C ein zähes Bruchverhalten im Kerbschlagversuch nach ISO 180-1A, gekennzeichnet durch einen Kerbschlagzähigkeitswert von größer als 30 kJ/m², und/oder ein zähes (nicht splitterndes) Bruchbild im Durchstoßversuch nach ISO 6603 zeigt.

Die bei der Herstellung der erfindungsgemäßen Verbundbauteile eingesetzten reaktiven Polyurethanrohstoffgemische weisen bevorzugt eine Kennzahl von > 80 bis < 125, weiter bevorzugt > 100 bis < 120, und besonders bevorzugt von 105 bis 115 auf.

Die Kennzahl ist definiert als prozentuales Verhältnis der tatsächlich eingesetzten Isocyanat-Menge zur berechneten stöchiometrischen Menge bei kompletter Polyol-Umsetzung, d.h. Kennzahl = (Isocyanat-Menge eingesetzt / Isocyanat-Menge stöchiometrisch, berechnet) ^{∗} 100.

In einer alternativen Ausführungsform kann anstelle des reaktiven Polyurethanrohstoffgemisches auch ein thermoplastisches Polyurethan verwendet werden.

In einer weiteren bevorzugten Ausführungsform wird die mit der thermoplastischen Polymerzusammensetzung in Kontakt stehende Oberfläche des Spritzgusswerkzeuges im Verfahrensschritt (iii) auf eine Temperatur im Bereich 50 bis 95°C, bevorzugt 60 bis 85°C, und besonders bevorzugt 60 bis 80°C temperiert.

In einer weiteren bevorzugten Ausführungsform wird die mit dem reaktiven Polyurethangemisch in Kontakt stehende Oberfläche des Spritzgusswerkzeuges im Verfahrensschritt (iii) auf eine Temperatur im Bereich 50 bis 160°C, bevorzugt 70 bis 120°C, weiter bevorzugt 80 bis 110°C, und besonders bevorzugt 90 bis 100 °C temperiert.

In einer weiter bevorzugten Ausführungsform wird die mit der thermoplastischen Polymerzusammensetzung in Kontakt stehende Oberfläche des Spritzgusswerkzeuges im Verfahrensschritt (iii) auf eine Temperatur im Bereich 50 bis 95°C, bevorzugt 60 bis 85°C, und besonders bevorzugt 60 bis 80°C temperiert und die mit dem reaktiven Polyurethangemisch in Kontakt stehende Oberfläche des Spritzgusswerkzeuges auf eine Temperatur im Bereich 50 bis 160°C, bevorzugt 70 bis 120°C, weiter bevorzugt 80 bis 110°C, und besonders bevorzugt 90 bis 100 °C temperiert.

Sofern es sich um ein geschäumtes Polyurethansystem mit Dekorschicht handelt, kann in einer alternativen Ausführungsform die mit der thermoplastischen Polymerzusammensetzung bzw. mit der Dekorhaut in Kontakt stehende Oberfläche des Verschäumungswerkzeugs auf eine Temperatur im Bereich 20 bis 80°C, bevorzugt 30 bis 60°C temperiert werden.

Die erfindungsgemäßen Verbundbauteile eignen sich besonders als Innen- oder Außenbauteil eines Schienen-, Luftfahrt- oder Kraftfahrzeuges.

In besonders bevorzugter Ausführungsform weist das Verbundbauteil bei -30°C ein zähes (nicht splitterndes) Bruchverhalten unter multiaxialer Schlagbelastung gemessen am Bruchbild im Durchstoßversuch nach ISO 6603 auf.

Die Verbund-Haftung zwischen dem Träger aus Polycarbonat-Zusammensetzung und der Polyurethan-Beschichtung in den erfindungsgemäßen Verbundbauteilen beträgt in bevorzugter Ausführungsform mindestens 1 N/mm gemessen an aus dem Bauteil entnommenen Streifenproben mit einer Breite von 20 mm in einem Rollenschälversuch gemäß DIN 53357 A mit einer Prüfgeschwindigkeit von 100 mm/min.

Die im erfindungsgemäßen Verfahren zum Einsatz kommenden Polymer-Zusammensetzungen enthalten:

### Komponente A

Erfindungsgemäß geeignete aromatische Polycarbonate und Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate und Polyestercarbonate erfolgt z. B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 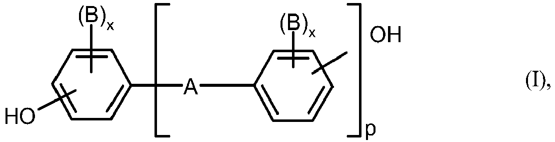 wobei
- A: eine Einfachbindung, C₁ bis C₅-Alkylen, C₂ bis C₅-Alkyliden, C₅ bis C₆-Cycloalkyliden, - O-, -SO-, -CO-, -S-, -SO₂-, C₆ bis C₁₂-Arylen, an das weitere aromatische gegebenenfalls Heteroatome enthaltende Ringe kondensiert sein können, oder ein Rest der Formel (II) oder (III) 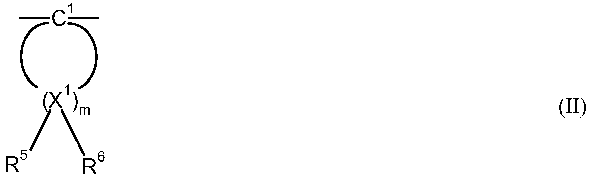 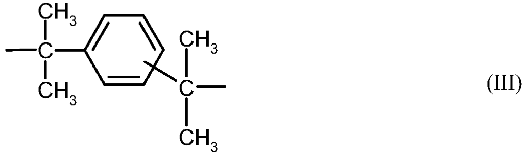
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C ₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenole oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt bevorzugt im Bereich 1,18 bis 1,4, besonders bevorzugt im Bereich 1,20 bis 1,32 (gemessen an Lösungen von 0,5 g Polycarbonat oder Polyestercarbonat in 100 ml Methylenchlorid-Lösung bei 25°C). Das gewichtsgemittelte Molekulargewicht Mw der aromatischen Polycarbonate und Polyestercarbonate liegt bevorzugt im Bereich von 15.000 bis 35.000, weiter bevorzugt im Bereich von 20.000 bis 33.000, besonders bevorzugt 23.000 bis 30.000, bestimmt durch GPC (Gelpermeationschromatographie in Methylenchlorid mit Polycarbonat als Standard).

Die erfindungsgemäß als Komponente A in Frage kommenden aromatischen Polyester sind in bevorzugter Ausführungsform Polyalkylenterephthalate. Es handelt sich hierbei in besonders bevorzugter Ausführungsform um Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Besonders bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 mol-%, bezogen auf die Diolkomponente Ethylenglykol- und/oder Butandiol-1,4-Reste.

Die bevorzugten Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 mol-%, vorzugsweise bis zu 10 mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Komponente B

Bei der Komponente B handelt es sich um kautschukbasierende Pfropfpolymerisate B.1 oder um Mischungen kautschukbasierender Pfropfpolymerisate B.1 mit kautschukfreien Vinyl(Co)Polymerisaten B.2, wobei der Kautschukgehalt der Komponente B über die Summe der Bestandteile mindestens 25,0 Gew.-Teile beträgt.

In Komponente B zum Einsatz kommende kautschukbasierende Pfropfpolymerisate B.1 umfassen
B.1.1 5 bis 95, vorzugsweise 15 bis 92, insbesondere 25 bis 60 Gew.-%, bezogen auf Komponente B.1, wenigstens eines Vinylmonomeren auf
B.1.2 95 bis 5, vorzugsweise 85 bis 8, insbesondere 75 bis 40 Gew.-%, bezogen auf Komponente B.1, einer oder mehrerer Pfropfgrundlagen mit Glasübergangstemperaturen < 10°C, vorzugsweise < 0°C, besonders bevorzugt < -20°C,

Die Glasübergangstemperatur wurde mittels dynamischer Differenz-Thermoanalyse (DSC) gemäß der Norm DIN EN 61006 bei einer Heizrate von 10 K/min mit Definition der T_{g} als Mittelpunkttemperatur (Tangentenmethode) bestimmt.

Die Pfropfgrundlage B.1.2 hat im allgemeinen eine mittlere Teilchengröße (d₅₀-Wert) von 0,05 bis 10,00 µm, vorzugsweise 0,1 bis 5,0 µm, besonders bevorzugt 0,2 bis 1,0 µm.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Monomere B.1.1 sind vorzugsweise Gemische aus
B.1.1.1 50 bis 99, bevorzugt 65 bis 85, insbesondere 75 bis 80 Gew.-Teile, bezogen auf B.1.1, Vinylaromaten und/oder kernsubstituierten Vinylaromaten (wie Styrol, α-Methylstyrol, p-Methylstyrol, p-Chlorstyrol) und/oder Methacrylsäure-(C₁-C₈)-Alkylester, wie Methylmethacrylat, Ethylmethacrylat), und
B.1.1.2 1 bis 50, bevorzugt 15 bis 35, insbesondere 20 bis 25 Gew.-Teilen, bezogen auf B.1.1, Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere B.1.1.1 sind ausgewählt aus mindestens einem der Monomere Styrol, α-Methylstyrol und Methylmethacrylat, bevorzugte Monomere B.1.1.2 sind ausgewählt aus mindestens einem der Monomere Acrylnitril, Maleinsäureanhydrid und Methylmethacrylat. Besonders bevorzugte Monomere sind B.1.1.1 Styrol und B.1.1.2 Acrylnitril.

Für die Pfropfpolymerisate B.1 geeignete Pfropfgrundlagen B.1.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon/Acrylat-Kompositkautschuke.

Bevorzugte Pfropfgrundlagen B.1.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß B.1.1.1 und B.1.1.2), mit der Maßgabe, dass die Glasübergangstemperatur der Komponente B.1.2 unterhalb < 10°C, vorzugsweise < 0°C, besonders bevorzugt < -20°C liegt.

Besonders bevorzugt als Pfropfgrundlage B.1.2 ist reiner Polybutadienkautschuk.

Besonders bevorzugte Polymerisate B.1 sind beispielsweise ABS- oder MBS-Polymerisate, wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die Pfropfcopolymerisate B.1 werden durch radikalische Polymerisation, z.B. durch Emulsions-, Suspensions-, Lösungs- oder Massepolymerisation, vorzugsweise durch Emulsions- oder Massepolymerisation, insbesondere durch Emulsionspolymerisation hergestellt.

Bei Pfropfpolymerisaten B.1, die im Emulsionspolymerisationsverfahren herstellt wurden, beträgt der Gehalt an Pfropfgrundlage B.1.2 bevorzugt 20 bis 95 Gew.-%, besonders bevorzugt 40 bis 85 Gew.-%, insbesondere 50 bis 75 Gew.-%, jeweils bezogen auf B.1.

Bei Pfropfpolymerisaten B.1, die im Masseverfahren herstellt wurden, beträgt der Gehalt an Pfropfgrundlage B.1.2 bevorzugt 5 bis 50 Gew.-%, besonders bevorzugt 8 bis 25 Gew.-%, insbesondere 10 bis 20 Gew.-%, jeweils bezogen auf B.1.

Der Gelanteil der Pfropfgrundlage B.1.2 beträgt mindestens 30 Gew.-%, vorzugsweise mindestens 40 Gew.-%, insbesondere mindestens 60 Gew.-%, jeweils bezogen auf B.1.2 und gemessen als unlöslicher Anteil in Toluol.

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B.1 auch solche Produkte verstanden, die durch (Co)Polymerisation der Pfropfmonomere in Gegenwart der Pfropfgrundlage gewonnen werden und bei der Aufarbeitung mit anfallen. Diese Produkte können demnach auch freies, d.h. nicht chemisch an den Kautschuk gebundenes (Co)Polymerisat der Pfropfmonomere enthalten.

Geeignete Acrylatkautschuke gemäß B.1.2 sind vorzugsweise Polymerisate aus Acrylsäurealkylestern, gegebenenfalls mit bis zu 40 Gew.-%, bezogen auf B.1.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzenden Monomere beträgt vorzugsweise 0,02 bis 5,00, insbesondere 0,05 bis 2,00 Gew.-%, bezogen auf die Pfropfgrundlage B.1.2. Bei cyclischen vernetzenden Monomeren mit mindestens drei ethylenisch ungesättigten Gruppen ist es vorteilhaft, die Menge auf unter 1,00 Gew.-% der Pfropfgrundlage B.1.2 zu beschränken.

Bevorzugte "andere" polymerisierbare, ethylenisch ungesättigte Monomere, die neben den Acrylsäureestern gegebenenfalls zur Herstellung der Pfropfgrundlage B.1.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.1.2 sind Emulsionspolymerisate, die einen Gelgehalt von mindestens 60 Gew.-% aufweisen.

Weitere geeignete Pfropfgrundlagen gemäß B.1.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.1.2 bzw. der Pfropfpolymere B.1 wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).

Bei den kautschukfreien Vinyl(Co)Polymerisaten gemäß Komponente B.2 handelt es sich vorzugsweise um kautschukfreie Homo- und/oder Copolymerisate von mindestens einem Monomeren aus der Gruppe der Vinylaromaten, Vinylcyanide (ungesättigte Nitrile), (Meth)Acrylsäure-(C₁ bis C₈)-Alkylester, ungesättigten Carbonsäuren sowie Derivaten (wie Anhydride und Imide) ungesättigter Carbonsäuren.

Insbesondere geeignet sind (Co)Polymerisate B.2 aus
B.2.1 50 bis 99 Gew.-%, bevorzugt 60 bis 80 Gew.-%, insbesondere 70 bis 80 Gew.-%, jeweils bezogen auf das Gesamtgewicht des (Co)Polymerisats B.2, mindestens eines Monomeren ausgewählt aus der Gruppe der Vinylaromaten, wie beispielsweise Styrol, α-Methylstyrol, kernsubstituierten Vinylaromaten, wie beispielsweise p-Methylstyrol, p-Chlorstyrol, und (Meth)Acrylsäure-(C₁-C₈)-Alkylester, wie beispielsweise Methylmethacrylat, n-Butylacrylat, tert.-Butylacrylat, und
B.2.2 1 bis 50 Gew.-%, bevorzugt 20 bis 40 Gew.-%, insbesondere 20 bis 30 Gew.-%, jeweils bezogen auf das Gesamtgewicht des (Co)Polymerisats B.2, mindestens eines Monomeren ausgewählt aus der Gruppe der Vinylcyanide, wie beispielsweise ungesättigte Nitrile wie z.B. Acrylnitril und Methacrylnitril, (Meth)Acrylsäure-(C₁-C₈)-Alkylester, wie beispielsweise Methylmethacrylat, n-Butylacrylat, tert.-Butylacrylat, ungesättigte Carbonsäuren und Derivate ungesättigter Carbonsäuren, wie beispielsweise Maleinsäureanhydrid und N-Phenyl-Maleinimid.

Diese (Co)Polymerisate B.2 sind harzartig, thermoplastisch und kautschukfrei. Besonders bevorzugt ist das Copolymerisat aus B.2.1 Styrol und B.2.2 Acrylnitril.

Derartige (Co)Polymerisate B.2 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte M_{w} (Gewichtsmittel, ermittelt durch GPC) zwischen 15.000 g/mol und 250.000 g/mol, bevorzugt im Bereich 80.000 bis 150.000 g/mol.

### Komponente C

Die Zusammensetzung kann als Komponente C handelsübliche Polymeradditive enthalten. Als handelsübliche Polymeradditive gemäß Komponente C kommen Additive wie beispielsweise Flammschutzmittel (beispielsweise Phosphorverbindungen wie Phosphor- oder Phosphonsäureester, Phosphonatamine und Phosphazene oder Halogenverbindungen), Flammschutzsynergisten (beispielsweise nanoskalige Metalloxide), rauchhemmende Additive (beispielsweise Borsäure oder Borate), Antidrippingmittel (beispielsweise Verbindungen der Substanzklassen der fluorierten Polyolefine, der Silikone sowie Aramidfasern), interne und externe Gleit- und Entformungsmittel (beispielsweise Pentaerythrittetrastearat, Stearylstearat, Montanwachs oder Polyethylenwax), Fließfähigkeitshilfsmittel (beispielsweise niedermolekulare Vinyl(co)polymerisate), Antistatika (beispielsweise Blockcopolymere aus Ethylenoxid und Propylenoxid, andere Polyether oder Polyhydroxyether, Poletheramide, Polyesteramide oder Sulfonsäuresalze), Leitfähigkeitsadditive (beispielsweise Leitruß oder Carbon Nanotubes), Nukleirmittel, Stabilisatoren (beispielsweise UV/Licht-Stabilisatoren, Thermostabilisatoren, Antioxidantien, Umesterungsinhibitoren, Hydrolyseschutzmittel), antibakteriell wirkende Additive (beispielsweise Silber oder Silbersalze), kratzfestigkeitsverbessernde Additive (beispielsweise Silikonöle oder harte Füllstoffe wie Keramik(hohl)kugeln), IR-Absorbentien, optische Aufheller, fluoreszierende Additive, Füll- und Verstärkungsstoffe (beispielsweise Talk, ggf. gemahlene Glas- oder Karbonfasern, Glas- oder Keramik(hohl)kugeln, Glimmer, Kaolin, CaCO₃ und Glasschuppen) sowie Farbstoffe und Pigmente (beispielsweise Ruß, Titandioxid oder Eisenoxid), Schlagzähmodifikatoren, die nicht unter die Definition von B.1 fallen und Brönstet-saure Verbindungen als Basenfänger, oder aber Mischungen mehrerer der genannten Additive in Frage.

### Polyurethane

Als Beschichtung wird vorzugsweise ein Polyurethanschaum oder eine kompakte Polyurethanschicht eingesetzt.

Die erfindungsgemäß zum Einsatz kommenden Polyurethane erhält man durch Umsetzung von Polyisocyanaten mit H-aktiven polyfunktionellen Verbindungen, vorzugsweise Polyolen.

Dabei werden unter dem Begriff "Polyurethan" im Rahmen dieser Erfindung auch Polyurethanharnstoffe verstanden, bei denen als H-aktive polyfunktionelle Verbindungen solche Verbindungen mit N-H-Funktionalität gegebenenfalls in Abmischung mit Polyolen zum Einsatz kommen.

Geeignete Polyisocyanate sind die dem Fachmann an sich bekannten aromatischen, araliphatischen, aliphatischen oder cycloaliphatischen Polyisocyanate einer NCO-Funktionalität von bevorzugt ≥ 2, welche auch Iminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen aufweisen können. Diese können einzeln oder in beliebigen Mischungen untereinander eingesetzt werden.

Die vorstehend genannten Polyisocyanate basieren dabei auf dem Fachmann an sich bekannten Di- bzw. Triisocyanaten mit aliphatisch, cycloaliphatisch, araliphatisch und/oder aromatisch gebundenen Isocyanatgruppen, wobei es unerheblich ist, ob diese unter Verwendung von Phosgen oder nach phosgenfreien Verfahren hergestellt wurden. Beispiele für solche Di- bzw. Triisocyanate sind 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan (Desmodur® W, Bayer AG, Leverkusen, DE), 4-Isocyanatomethyl-1,8-octandiisocyanat (Triisocyanatononan, TIN), ω,ω'-Diisocyanato-1,3-dimethylcyclohexan (H₆XDI), 1-Isocyanato-1-methyl-3-isocyanato-methylcyclohexan, 1-Isocyanato-1-methyl-4-isocyanato-methylcyclohexan, Bis-(isocyanatomethyl)-norbornan, 1,5-Naphthalen-diisocyanat, 1,3- und 1,4-Bis-(2-isocyanato-prop-2-yl)-benzol (TMXDI), 2,4- und 2,6-Diisocyanatotoluol (TDI) insbesondere das 2,4 und das 2,6-Isomere und technische Gemische der beiden Isomeren, 2,4'- und 4,4'-Diisocyanatodiphenylmethan (MDI), polymeres MDI (pMDI) 1,5-Diisocyanatonaphthalin, 1,3-Bis(isocyanato-methyl)benzol (XDI) sowie beliebige Mischungen genannter Verbindungen.

Bevorzugt weisen die Polyisocyanate dabei eine mittlere NCO-Funktionalität von 2,0 bis 5,0, bevorzugt von 2,2 bis 4,5, besonders bevorzugt von 2,2 bis 2,7 und einen Gehalt an Isocyanatgruppen von 5,0 bis 37,0 Gew.-%, bevorzugt von 14,0 bis 34,0 Gew.-% auf.

In einer bevorzugten Ausführungsform werden Polyisocyanate oder Polyisocyanatgemische der vorstehend genannten Art mit ausschließlich aliphatisch und/oder cycloaliphatisch gebundenen Isocyanatgruppen eingesetzt.

Ganz besonders bevorzugt basieren die Polyisocyanate der vorstehend genannten Art auf Hexamethylendiisocyanat, Isophorondiisocyanat, den isomeren Bis-(4,4'-isocyanatocyclohexyl)methanen sowie deren Mischungen.

Unter den höhermolekularen, modifizierten Polyisocyanaten sind insbesondere die aus der Polyurethanchemie bekannten Prepolymeren mit endständigen Isocyanatgruppen des Molekulargewichtsbereichs 400 bis 15.000, vorzugsweise 600 bis 12.000 von Interesse. Diese Verbindungen werden in an sich bekannter Weise durch Umsetzung von überschüssigen Mengen an einfachen Polyisocyanaten der beispielhaft genannten Art mit organischen Verbindungen mit mindestens zwei gegenüber Isocyanatgruppen reaktionsfähigen Gruppen, insbesondere organischen Polyhydroxylverbindungen hergestellt. Geeignete derartige Polyhydroxylverbindungen sind sowohl einfache mehrwertige Alkohole des Molekulargewichtsbereichs 62 bis 599, vorzugsweise 62 bis 200, wie z.B. Ethylenglykol, Trimethylolpropan, Propandiol-1,2 oder Butandiol-1,4 oder Butandiol-2,3, insbesondere jedoch höhermolekulare Polyetherpolyole und/oder Polyesterpolyole der aus der Polyurethanchemie an sich bekannten Art mit Molekulargewichten von 600 bis 12.000, vorzugsweise 800 bis 4.000, die mindestens zwei, in der Regel 2 bis 8, vorzugsweise aber 2 bis 6 primäre und/oder sekundäre Hydroxylgruppen aufweisen. Selbstverständlich können auch solche NCO-Prepolymere eingesetzt werden, die beispielsweise aus niedermolekularen Polyisocyanaten der beispielhaft genannten Art und weniger bevorzugten Verbindungen mit gegenüber Isocyanatgruppen reaktionsfähigen Gruppen wie z.B. Polythioetherpolyolen, Hydroxylgruppen aufweisenden Polyacetalen, Polyhydroxypolycarbonaten, Hydroxylgruppen aufweisenden Polyesteramiden oder Hydroxylgruppen aufweisenden Copolymerisaten olefinisch ungesättigter Verbindungen erhalten worden sind.

Zur Herstellung der NCO-Prepolymeren geeignete Verbindungen mit gegenüber Isocyanatgruppen reaktionsfähigen Gruppen, insbesondere Hydroxylgruppen, sind beispielsweise die in der US-A 4 218 543 offenbarten Verbindungen. Bei der Herstellung der NCO-Prepolymeren werden diese Verbindungen mit gegenüber Isocyanatgruppen reaktionsfähigen Gruppen mit einfachen Polyisocyanaten der oben beispielhaft genannten Art unter Einhaltung eines NCO-Überschusses zur Umsetzung gebracht. Die NCO-Prepolymeren weisen im allgemeinen einen NCO-Gehalt von 10 bis 26 vorzugsweise 15 bis 26 Gew.% auf. Hieraus geht bereits hervor, dass im Rahmen der vorliegenden Erfindung unter "NCO-Prepolymeren" bzw. unter "Prepolymeren mit endständigen Isocyanatgruppen" sowohl die Umsetzungsprodukte als solche als auch die Gemische mit überschüssigen Mengen an nicht umgesetzten Ausgangspolyisocyanaten, die oft auch als "Semiprepolymere" bezeichnet werden, zu verstehen sind.

Als aliphatische Diole mit einer OH-Zahl von >500 mg KOH/g kommen die üblicherweise in der Polyurethanchemie verwendeten Kettenverlängerer in Betracht wie Ethylenglykol, Diethylenglykol, Propylenglykol, Dipropylenglykol, Butandiol-1,4, Propandiol-1,3. Bevorzugt sind Diole wie 2-Butandiol-1,4, Butendiol-1,3, Butandiol-2,3 und/oder 2-Methylpropandiol-1,3. Selbstverständlich ist es auch möglich, die aliphatischen Diole im Gemisch untereinander einzusetzen.

Als H-aktive Komponente eignen sich Polyole mit einer mittleren OH-Zahl von 5 bis 600 mg KOH/g und einer mittleren Funktionalität von 2 bis 6. Bevorzugt sind Polyole mit einer mittleren OH-Zahl von 10 bis 50 mg KOH/g. Erfindungsgemäß geeignete Polyole stellen beispielsweise Polyhydroxypolyether dar, die durch Alkoxylierung geeigneter Startermoleküle wie Ethylenglykol, Diethylenglykol, 1,4-Dihydroxybutan, 1,6-Dihydroxyhexan, Dimethylolpropan, Glycerin, Pentaerythrit, Sorbit oder Saccharose zugänglich sind. Als Starter können ebenfalls fungieren Ammoniak oder Amine wie Ethylendiamin, Hexamethylendiamin, 2,4-Diaminotoluol, Anilin oder Aminoalkohole oder Phenole wie Bisphenol-A. Die Alkoxylierung erfolgt unter Verwendung von Propylenoxid und/oder Ethylenoxid in beliebiger Reihenfolge oder als Gemisch.

Neben Polyolen kann zusätzlich mindestens ein weiterer Vernetzer und/oder Kettenverlängerer enthalten sein ausgewählt aus der Gruppe, die Amine und Aminoalkohole, beispielsweise Ethanolamin, Diethanolamin, Diisopropanolamin, Ethylendiamin, Triethanolamin, Isophrondiamin, N,N'-dimethyl(diethyl)-ethylendiamin, 2-amino-2-methyl (oder ethyl)-1-propanol, 2-Amino-1-butanol, 3-Amino-1,2-propandiol, 2-Amino-2-methyl(ethyl)-1,3-propandiol, und Alkohole, beispielsweise Ethylenglykol, Diethylenglykol, 1,4-Dihydroxybutan, 1,6-Dihydroxyhexan, Dimethylolpropan, Glycerin und Pentaerythrit, sowie Sorbit und Saccharose, oder Gemische dieser Verbindungen enthält.

Ferner geeignet sind Polyesterpolyole, wie sie durch Umsetzung niedermolekularer Alkohole mit mehrwertigen Carbonsäuren wie Adipinsäure, Phthalsäure, Hexahydrophthalsäure, Tetrahydrophthalsäure oder den Anhydriden dieser Säuren in an sich bekannter Weise zugänglich sind, sofern die Viskosität der H-aktiven Komponente nicht zu groß wird. Ein bevorzugtes Polyol, das Estergruppen aufweist, ist Rizinusöl. Daneben sind auch Zubereitungen mit Rizinusöl, wie sie durch Auflösung von Harzen, z.B. von Aldehyd-Keton-Harzen, erhalten werden können, sowie Modifikationen von Rizinusöl und Polyole auf Basis anderer natürlicher Öle geeignet.

Ebenfalls geeignet sind solche höhermolekularen Polyhydroxypolyether, in denen hochmolekulare Polyaddukte bzw. Polykondensate oder Polymerisate in feindisperser, gelöster oder aufgepfropfter Form vorliegen. Derartige modifizierte Polyhydroxyverbindungen werden in an sich bekannter Weise z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen lässt. Es ist aber auch möglich, eine fertige wässrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern oder Polycarbonatpolyolen erhalten werden, sind für die Herstellung von Polyurethanen geeignet. Bei Verwendung von Polyetherpolyolen, welche gemäß DE-A 2 442 101, DE-A 2 844 922 und DE-A 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit.

Vertreter der genannten, als H-aktiven Verbindungen zu verwendenden Verbindungen sind z.B. in High Polymers, Vol. XVI, "Polyurethanes Chemistry and Technology", Saunders-Frisch (Hrg.) Interscience Publishers, New York, London, Bd. 1, S. 32-42, 44,54 und Bd. II, 1984, s. 5-6 und S. 198-199 beschrieben.

Es können auch Gemische der aufgezählten Verbindungen eingesetzt werden.

Die Begrenzung der mittleren OH-Zahl und mittleren Funktionalität der H-aktiven Komponente ergibt sich insbesondere aus der zunehmenden Versprödung des resultierenden Polyurethans. Grundsätzlich sind dem Fachmann aber die Einflussmöglichkeiten auf die polymerphysikalischen Eigenschaften des Polyurethans bekannt, so dass NCO-Komponente, aliphatisches Diol und Polyol in günstiger Weise aufeinander abgestimmt werden können.

Die Polyurethanschicht (b) kann geschäumt oder massiv, wie z.B. als Lack oder Beschichtung vorliegen.

Zu deren Herstellung können alle an sich bekannten Hilfs- und Zusatzstoffe wie z.B. Trennmittel, Treibmittel, Füllstoffe, Katalysatoren und Flammschutzmittel eingesetzt werden.

Gegebenenfalls als Hilfs- und Zusatzmittel sind dabei zu verwenden:

### a) Wasser und/oder leicht flüchtige anorganische oder organische Substanzen als Treibmittel

Als organische Treibmittel kommen z.B. Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether, als anorganische Treibmittel Luft, CO₂ oder N₂O in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden.

### b) Katalysatoren

Bei den Katalysatoren handelt sich beispielsweise um
tertiäre Amine (wie Triethylamin, Tributylamin, N-Methylmorpholin, N-Ethylmorpholin, N,N,N',N'-Tetramethylethylendiamin, Pentamethyldiethylentriamin und höhere Homologe, 1,4-Diazabicyclo-(2,2,2)octan, N-Methyl-N'-dimethylaminoethylpiperazin, Bis-(dimethylaminoalkyl)piperazine, N,N-Dimethylbenzylamin, N,N-Dimethylcyclohexylamin, N,N-Diethylbenzylamin, Bis-(N,N-diethylamino-ethyl)adipat, N,N,N',N'-Tetramethyl-1,3-butandiamin, N,N-Dimethyl-ß-phenylethylamin, 1,2-Dimethylimidazol, 2-Methylimidazol),
monocyclische und bicyclische Amide, Bis-(dialkylamino)alkylether,
Amidgruppen (vorzugsweise Formamidgruppen) aufweisende tertiäre Amine,
Mannichbasen aus sekundären Aminen (wie Dimethylamin) und Aldehyden, (vorzugsweise Formaldehyd oder Ketonen wie Aceton, Methylethylketon oder Cyclohexanon) und Phenolen (wie Phenol, Nonylphenol oder Bisphenol),
gegenüber Isocyanatgruppen aktive Wasserstoffatome aufweisende tertiäre Amine (z.B. Triethanolamin, Triisopropanolamin, N-Methyldiethanolamin, N-Ethyldietanolamin, N,N-Dimethylethanolamin), sowie deren Umsetzungsprodukte mit Alkylenoxiden wie Propylenoxid und/oder Ehtylenoxid,
sekundärtertiäre Amine,
Silaamine mit Kohlenstoff-Silicium-Bindungen (2,2,4-Trimethyl-2-silamorpholin und 1,3-Diethylaminomethyltetramethyldisiloxan),
stickstoffhaltige Basen (wie Tetraalkylammoniumhydroxide),
Alkalihydroxide (wie Natriumhydroxid, Alkaliphenolate wie Natriumphenolat),
Alkalialkoholate (wie Natriummethylat), und/oder
Hexahydrotriazine.

Die Reaktion zwischen NCO-Gruppen und Zerewitinoff-aktiven Wasserstoffatomen wird in an sich bekannter Weise auch durch Lactame und Azalactame stark beschleunigt, wobei sich zunächst ein Assoziat zwischen dem Lactam und der Verbindung mit acidem Wasserstoff ausbildet.

Es können auch organische Metallverbindungen, insbesondere organische Zinn- und/oder Bismuthverbindungen, als Katalysatoren verwendet werden. Als organische Zinnverbindungen kommen neben schwefelhaltigen Verbindungen wie Di-n-octyl-zinn-mercaptid vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht. Organische Bismuth-Katalysatoren werden beispielsweise in der Patentanmeldung WO 2004/000905 beschrieben.

Selbstverständlich können alle oben genannten Katalysatoren als Gemische eingesetzt werden. Von besonderem Interesse sind dabei Kombinationen aus organischen Metallverbindungen und Amidinen, Aminopyridinen oder Hydrazinopyridinen.

Die Katalysatoren werden in der Regel in einer Menge von etwa 0,001 bis 10 Gew.%, bezogen auf die Gesamtmenge an Verbindungen mit mindestens zwei gegenüber Isocyanaten reaktionsfähigen Wasserstoffatomen, eingesetzt.

### c) Oberflächenaktive Zusatzstoffe wie Emulgatoren und Schaumstabilisatoren.

Als Emulgatoren kommen z.B. die Natriumsalze von Rizinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Rizinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, in Frage. Diese Verbindungen sind im allgemeinen so aufgebaut, dass ein Copolymerisat aus Ethylenoxid und Propylenoxid mit einem Polydimethylsiloxanrest verbunden ist. Von besonderem Interesse sind vielfach über Allophanatgruppen verzweigte Polysiloxan-Polyoxyalkylen-Copolymere.

### d) Reaktionsverzögerer

Als Reaktionsverzögerer kommen z.B. sauer reagierende Stoffe (wie Salzsäure oder organische Säurehalogenide) in Frage.

### e) Additive

Als PU-Additive kommen beispielsweise Zellregler der an sich bekannten Art (wie Paraffine oder Fettalkohole) oder Dimethylpolysiloxane sowie Pigmente oder Farbstoffe und Flammschutzmittel der an sich bekannten Art (z.B. Tris-chlorethylphosphat, Trikresylphosphat oder Ammoniumphosphat und -polyphosphat), ferner Stabilisatoren gegen Alterungs- und Witterungseinflüsse, Weichmacher und fungistatisch und bakteriostatisch wirkende Substanzen sowie Füllstoffe (wie Bariumsulfat, Kieselgur, Ruß oder Schlämmkreide) in Betracht.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sind dem Fachmann bekannt und in der Literatur beschrieben.

### Beispiele

### Polycarbonat-Zusammensetzungen

### Komponente A

### Komponente A-1

Lineares Polycarbonat auf Basis von Bisphenol-A mit einem gewichtsgemittelten Molekulargewicht M_{w} von 28.000 g/mol .

### Komponente B

### Komponente B-1

ABS-Polymerisat mit einem Acrylnitril: Butadien : Styrol-Gewichtsverhältnis von 20:18:62 Gew.-Teile.

### Komponente B-2

ABS-Polymerisat mit einem Acrylnitril: Butadien : Styrol-Gewichtsverhältnis von 20:26:54 Gew.-Teile.

### Komponente C

C-1: Pentaerythrittetrastearat (PETS) als Gleit-/Entformungsmittel
C-2: Irganox® B900: Gemisch aus 80 Gew.-% Irgafos® 168 (Tris-(2,4-di-tert.-butyl)phenyl-phosphit) und 20 Gew.-% Irganox® 1076 (Octadecyl-3-(3,5-di-tert-butyl-4-hydroxyphenyl)propionat) (BASF, Deutschland)
C-3: Irganox® 1076 (Octadecyl-3-(3,5-di-tert-butyl-4-hydroxyphenyl)propionat) (BASF, Deutschland)
C4: Ruß als Pigment

### Reaktives Polyurethanrohstoffgemisch

Als Polyurethan-Beschichtungssystem kam eine Mischung aus Bayflex® VP.PU 47IF01A (Polyolkomponente) und Desmodur® VP.PU 48IF30 (Diisocyanat-Komponente), beide von Bayer MaterialScience AG, Leverkusen, Deutschland, mit einer Kennzahl von 95 zum Einsatz.

Bayflex® VP.PU 47IF01A ist ein Polyol auf Basis eines langkettigen Polyethers, enthaltend E-thandiol, Diethanolamin, Isophorondiamin, mit einer Viskosität nach DIN 53019 von 1.600 mPa.s bei 20 °C, einer Dichte nach DIN 51757von 1,04 g/cm³ bei 20 °C und einer Hydroxylzahl von 166 mg KOH/g.

Desmodur® VP.PU 48IF30 ist ein aliphatisches Isocyanat auf Basis von Isophorondiisocyanat (IPDI) mit einem NCO-Gehalt nach DIN EN ISO 11909 von 30,5 Gew.-%, einer Viskosität bei 23°C nach DIN EN ISO 3219/A.3 von 200 mPa·s und einer Dichte bei 20 °C nach DIN EN ISO 2811 von 1,1 g/cm³.

### Herstellung und Charakterisierung der Polycarbonat-Formmassen

Auf einem Zweischneckenextruder (ZSK-25) (Fa. Werner und Pfleiderer) werden die in Tabelle 1 aufgeführten Einsatzstoffe bei einer Drehzahl von 220 Upm und mit einem Durchsatz von 20 kg/h bei einer Schmelzetemperatur im Bereich von 260 bis 280°C compoundiert und nach Abkühlen und Verfestigung der Schmelze des Compounds granuliert.

Die aus der jeweiligen Compoundierung resultierenden Granulate werden auf einer Spritzgussmaschine (Fa. Arburg) bei einer Schmelzetemperatur von 260°C und einer Werkzeugtemperatur von 80°C zu Prüfkörpern der Abmessung 80 mm x 10 mm x 4 mm verarbeitet.

Sofern nicht anders angegeben, werden die in der vorliegenden Anmeldung genannten Größen nach den folgenden Verfahren bestimmt:
Die Duktilität der Formmassen wird beurteilt anhand des Kerbschlagzähigkeitswertes aₖ gemessen an diesen Prüfkörpern gemäß ISO 180-1A bei 23°C und -30°C.

Die Wärmeformbeständigkeit wird beurteilt anhand des Vicat B120-Wertes gemessen an diesen Prüfkörpern gemäß ISO 306.

Die Schmelzefließfähigkeit wird beurteilt anhand der Schmelzeviskosität gemessen bei 260°C und einer Scherrate von 1000 s⁻¹ in Anlehnung an ISO 11443.

Die Verbund-Haftung zwischen dem Substrat aus Polycarbonat-Zusammensetzung und der Polyurethan-Haut wird an Streifenproben mit einer Breite von 20 mm, welche aus den so hergestellten, partiell PU-beschichteten 2-Komponenten-Verbundplatten gesägt wurden, durch einen Rollenschälversuch gemäß DIN 53357 A mit einer Prüfgeschwindigkeit von 100 mm/min ermittelt.

### Herstellung der Verbundbauteile

Es wurden partiell oberflächig beschichtete Formteile mit einer projizierten Fläche von 412 cm² auf einer Spritzgießmaschine in einem Spritzgießwerkzeug mit zwei Kavitäten (einer substratseitigen Kavität und einer polyurethanseitigen Beschichtungskavität, die mit einer RIM-Anlage verknüpft war), hergestellt. Bei dem Verbundbauteil handelt es sich um ein plattenförmiges Bauteil aus thermoplastischem Kunststoff (Träger), dessen Fläche partiell mit einer Polyurethanhaut beschichtet wurde. Die Wanddicke des Trägerformteils betrug ca. 4 mm. Die Polyurethanschichtdicke betrug ebenfalls 4 mm.

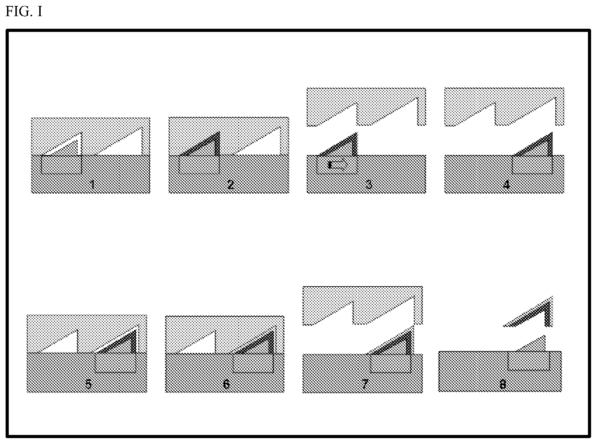

Das erfindungsgemäße Verfahren zur Herstellung der in den Beispielen beschriebenen erfindungsgemäßen Verbundbauteile ist zur besseren Veranschaulichung in Figur 1 dargestellt.

Im ersten Verfahrensschritt wurde das Trägerformteil hergestellt. Dazu wurde thermoplastisches Kunststoffgranulat der Zusammensetzungen wie in Tabelle 1 beschrieben in einem Spritzgießzylinder aufgeschmolzen und bei einer Temperatur von 270°C in die erste Werkzeugkavität des geschlossenen Werkzeugs eingespritzt (Schritte 1 und 2 in Figur 1). Diese Werkzeugkavität wurde auf eine Temperatur von 80°C temperiert. Nach Ablauf der Nachdruckzeit und Kühlzeit, die zur Verfestigung des Trägers führte, wurde im zweiten Verfahrensschritt das Werkzeug geöffnet (Schritt 3 in Figur 1). Dabei wurde das hergestellte Trägerbauteil auf der Auswerferseite des Spritzgießwerkzeugs gehalten und von der Träger-Position (Schritt 3 in Figur 1) komplett mit dem Werkzeugkern über einen Schieber in die Beschichtungs-Position (Schritt 4 in Abbildung 1) verfahren. Danach wurde das Spritzgießwerkzeug erneut geschlossen (Schritt 5 in Figur 1), eine Schließkraft für einen Druck von maximal 200 bar wurde aufgebaut und im dritten Verfahrensschritt das lösemittelfreie reaktive Polyurethansystem (s.o.) unter einem Druck von ca. 30 bar in die Beschichtungkavität eingespritzt (Schritt 6 in Figur 1). Die zwei reaktiven Komponenten des Polyurethan-Beschichtungssystems wurden dabei von der RIM-Anlage in einen Hochdruckgegenstrommischkopf gefördert und vor dem Einspritzen dort vermischt. Die PU-seitige Kavität wurde dabei auf eine Temperatur von 80°C temperiert. Nach dem Ende des Einspritzens wurde die Einspritzdüse des Polyurethan-Mischkopfes mittels eines Hydraulikzylinders unter einem Druck von zunächst 50 bar versiegelt, um ein Zurückströmen des Beschichtungsmaterials zu verhindern. Nach Ablauf der Reaktions- und Kühlzeit wurde im vierten Verfahrensschritt das Werkzeug ein weiteres Mal geöffnet (Schritt 7 in Figur 1) und das beschichtete Formteil entformt (Schritt 8 in Figur 1).

Tabelle 1 zeigt den Einfluß der Trägerzusammensetzungen auf die Haftung zwischen den Schichten des Verbundbauteils. Die Beispiele zeigen den positiven überraschenden Einfluss einer Erhöhung des Kautschukgehaltes in Komponente B [K_{B}] sowie des Kautschukgehaltes der Zusammensetzung, bezogen auf die Summe aus A und B, [K] auf die Haftung des Trägers zur PU-Haut.

**Tabelle 1:**

| | **1(V)** | **2** |
|---|---|---|
| A1 | 50 | 50 |
| B1 | 50 | |
| B2 | | 50 |
| C1 | 0,75 | 0,75 |
| C2 | 0,10 | 0,10 |
| C3 | 0,20 | 0,20 |
| C4 | 0,2 | 0,2 |
| [K_{B}] | 18 | 26 |
| [K] | 9 | 13 |
| Quotient Q | 2,8 | 1,9 |
| Haftung des Trägers zur PU-Haut [N/mm] | 0,38 | 1,1 |
| ak (23°C) - 260°C [KJ/m²] | 48 | 41 |
| ak (-30°C) - 260°C [KJ/m2] | 27 | 56 |
| Vicat B120 [°C] | 110,3 | 115,6 |
| Schmelzeviskosität (260°C/1000s⁻¹) [Pa·s] | 186 | 236 |

## Patentansprüche

1. Verbundbauteile umfassend
a) einen Träger aus einer thermoplastischen Zusammensetzung enthaltend
A) mindestens ein Polymer ausgewählt aus der Gruppe der aromatischen Polycarbonate, aromatischen Polyestercarbonate und aromatischen Polyester in einem Anteil von [A] von 30,0 bis 64,9 Gew.-Teile, bezogen auf die Summe der Komponenten A und B,
B) mindestens ein kautschukmodifiziertes Vinyl(co)polymerisat in einem Anteil von [B] von 35,1 bis 70,0 Gew.-Teile, bezogen auf die Summe der Komponenten A und B, mit einem Kautschukgehalt [K_{B}] von mindestens 25,0 Gew.-Teilen, bezogen auf die Komponente B
und
C) ein Polymeradditiv in einem Anteil von [C] von 0 bis 30,0 Gew.-Teile, bezogen auf die Summe der Komponenten A bis C, und
b) mindestens eine Polyurethanschicht,
wobei die thermoplastische Zusammensetzung **gekennzeichnet ist durch** einen Gesamtkautschukgehalt, bezogen auf die Summe der Komponenten A und B, von mindestens 12 Gew.- Teilen.

2. Verbundbauteile gemäß Anspruch 1, **dadurch gekennzeichnet, dass** die thermoplastische Zusammensetzung des Trägers enthält:
A) 40,0 bis 64,9 Gew.-Teile, bezogen auf die Summe der Komponenten A und B, mindestens eines Polymers ausgewählt aus der Gruppe der aromatischen Polycarbonate, aromatischen Polyestercarbonate und aromatischen Polyester,
B) 35,1 bis 60 Gew.-Teile, bezogen auf die Summe der Komponenten A und B, mindestens eines kautschukmodifizierten Vinyl(co)polymerisats.

3. Verbundbauteile gemäß Anspruch 2, **dadurch gekennzeichnet, dass** der Quotient Q=[B]/ [K_{B}] kleiner als 2, bevorzugt kleines als 1,7 insbesondere bevorzugt kleiner als 1,5 ist.

4. Verbundbauteile gemäß einem der Ansprüche 1 bis 3, **dadurch gekennzeichnet, dass** als Komponente A ein Gemisch aus mindestens einem aromatischen Polycarbonat und/oder Polyestercarbonat und mindestens einem aromatischen Polyester zum Einsatz kommt.

5. Verbundbauteile nach einem der vorhergehenden Ansprüche, **dadurch gekennzeichnet, dass** die Polyurethanschicht hergestellt ist durch Auspolymerisation eines reaktiven Polyurethanrohstoffgemischs enthaltend
- mindestens eine Polyisocyanat-Komponente,
- mindestens eine polyfunktionelle H-aktive Verbindung, und
- optional mindestens ein Polyurethan-Additiv und/oder Prozesshilfsstoff
in direktem Kontakt mit dem zuvor aus der thermoplastischen Zusammensetzung geformten und erstarrten Träger.

6. Verbundbauteile nach einem der vorhergehenden Ansprüche, **dadurch gekennzeichnet, dass** die Polyurethanschicht hergestellt ist durch Auspolymerisation eines reaktiven Polyurethanrohstoffgemischs enthaltend
- mindestens eine Polyisocyanat-Komponente,
- mindestens eine polyfunktionelle H-aktive Verbindung, und
- optional mindestens ein Polyurethan-Additiv und/oder Prozesshilfsstoff
auf der einen Seite in direktem Kontakt mit dem zuvor aus der thermoplastischen Zusammensetzung geformten und erstarrten Träger und auf der anderen Seite im direkten Kontakt mit einer Dekorhaut wahlweise bestehend aus Polyvinylchorid (PVC), thermoplastischen Polyolefinen (TPO), thermoplastischen Polyurethan (TPU) oder einer Polyurethansprühhaut.

7. Verbundbauteile nach Anspruch 5 oder 6, **dadurch gekennzeichnet, dass** das reaktive Polyurethanrohstoffgemisch eine Kennzahl von > 80 bis < 125 aufweist.

8. Verbundbauteile nach einem der vorhergehenden Ansprüche, **dadurch gekennzeichnet, dass** die Komponente C ausgewählt ist aus mindestens einem Vertreter aus der Gruppe bestehend aus Flammschutzmitteln, Flammschutzsynergisten, rauchhemmenden Additiven, Antidrippingmitteln, internen und externen Gleit- und Entformungsmitteln, Fließfähigkeitshilfsmitteln, Antistatika, Leitfähigkeitsadditiven, Nukleiermitteln, Stabilisatoren, antibakteriell wirkenden Additiven, kratzfestigkeitsverbessernden Additiven, IR-Absorbentien, optischen Aufhellern, fluoreszierenden Additiven, Füll- und Verstärkungsstoffen, Farbstoffen und Pigmenten, Schlagzähmodifikatoren, die nicht unter die Definition von B.1 fallen, und Brönstedt-sauren Verbindungen.

9. Verbundbauteile nach einem der vorhergehenden Ansprüche herstellt durch ein Verfahren, in dem
(i) in einem ersten Verfahrensschritt die Schmelze der thermoplastischen Zusammensetzung in eine erste Werkzeugkavität eingespritzt und nachfolgend abgekühlt wird,
(ii) in einem zweiten Verfahrensschritt die Kavität des Spritzgusswerkzeugs vergrößert und dadurch ein Spaltraum erzeugt wird,
(iii) im dritten Verfahrensschritt in den so resultierenden Spaltraum zwischen dem thermoplastischen Bauteil und der Werkzeugoberfläche der vergrößerten Kavität ein reaktives Polyurethanrohstoffgemisch enthaltend
- mindestens eine Polyisocyanat-Komponente,
- mindestens eine polyfunktionelle H-aktive Verbindung, und
- optional mindestens ein Polyurethan-Additiv und/oder Prozesshilfsstoff
gespritzt wird, wobei das Polyurethanrohstoffgemisch im direkten Kontakt mit der Oberfläche des thermoplastischen Trägers zu einer kompakten Polyurethanschicht oder zu einer Polyurethanschaumschicht auspolymerisiert,
(iv) im vierten Verfahrensschritt das Verbundbauteil aus der Werkzeugkavität entformt wird, wobei die Verfahrensschritte (i) bis (iv) unmittelbar aufeinander folgen.

10. Verfahren zur Herstellung eines Verbundbauteils nach einem der Ansprüche 1 bis 9, **dadurch gekennzeichnet, dass**
(i) in einem ersten Verfahrensschritt die Schmelze der thermoplastischen Zusammensetzung in eine erste Werkzeugkavität eingespritzt und nachfolgend abgekühlt wird,
(ii) in einem zweiten Verfahrensschritt die Kavität des Spritzgusswerkzeugs vergrößert und dadurch ein Spaltraum erzeugt wird,
(iii) im dritten Verfahrensschritt in den so resultierenden Spaltraum zwischen dem thermoplastischen Bauteil und der Werkzeugoberfläche der vergrößerten Kavität ein reaktives Polyurethanrohstoffgemisch enthaltend
- mindestens eine Polyisocyanat-Komponente,
- mindestens eine polyfunktionelle H-aktive Verbindung, und
- optional mindestens ein Polyurethan-Additiv und/oder Prozesshilfsstoff
gespritzt wird, wobei das Polyurethanrohstoffgemisch im direkten Kontakt mit der Oberfläche des thermoplastischen Trägers zu einer kompakten Polyurethanschicht oder zu einer Polyurethanschaumschicht auspolymerisiert,
(iv) im vierten Verfahrensschritt das Verbundbauteil aus der Werkzeugkavität entformt wird, wobei die Verfahrensschritte (i) bis (iv) unmittelbar aufeinander folgen.

11. Verfahren nach Anspruch 10, **dadurch gekennzeichnet, dass** im Verfahrensschritt (iii) die mit der thermoplastischen Zusammensetzung in Kontakt stehende Oberfläche des Spritzgusswerkzeuges auf eine Temperatur im Bereich 50 bis 95°C und die mit dem reaktiven Polyurethangemisch in Kontakt stehende Oberfläche des Spritzgusswerkzeuges auf eine Temperatur im Bereich 50 bis 160°C temperiert wird.

12. Verwendung eines Verbundbauteils gemäß einem der Ansprüche 1 bis 9 als Innen- oder Außenbauteil eines Schienen-, Luftfahrt- oder Kraftfahrzeuge.

## Claims

1. Composite components comprising
a) a support of a thermoplastic composition comprising
A) at least one polymer chosen from the group of aromatic polycarbonates, aromatic polyester carbonates and aromatic polyesters in a content of [A] of from 30.0 to 64.9 parts by wt., based on the sum of components A and B,
B) at least one rubber-modified vinyl (co)polymer in a content of [B] of from 35.1 to 70.0 parts by wt., based on the sum of components A and B, with a rubber content [R_{B}] of at least 25.0 parts by wt., based on component B
and
C) a polymer additive in a content of [C] of from 0 to 30.0 parts by wt., based on the sum of components A to C, and
b) at least one polyurethane layer,
wherein the thermoplastic composition is **characterized by** a total rubber content, based on the sum of components A and B, of at least 12 parts by wt.

2. Composite components according to Claim 1, **characterized in that** the thermoplastic composition of the support comprises:
A) 40.0 to 64.9 parts by wt., based on the sum of components A and B, of at least one polymer chosen from the group of aromatic polycarbonates, aromatic polyester carbonates and aromatic polyesters,
B) 35.1 to 60 parts by wt., based on the sum of components A and B, of at least one rubber-modified vinyl (co)polymer.

3. Composite components according to Claim 2, **characterized in that** the quotient Q=[B]/[R_{B}] is less than 2, preferably less than 1.7, particularly preferably less than 1.5.

4. Composite components according to one of Claims 1 to 3, **characterized in that** a mixture of at least one aromatic polycarbonate and/or polyester carbonate and at least one aromatic polyester is employed as component A.

5. Composite components according to one of the preceding claims, **characterized in that** the polyurethane layer is produced by complete polymerization of a reactive polyurethane raw material mixture comprising
- at least one polyisocyanate component,
- at least one polyfunctional H-active compound, and
- optionally at least one polyurethane additive and/or process auxiliary substance
in direct contact with the support formed and solidified beforehand from the thermoplastic composition.

6. Composite components according to one of the preceding claims, **characterized in that** the polyurethane layer is produced by complete polymerization of a reactive polyurethane raw material mixture comprising
- at least one polyisocyanate component,
- at least one polyfunctional H-active compound, and
- optionally at least one polyurethane additive and/or process auxiliary substance
on the one side in direct contact with the support formed and solidified beforehand from the thermoplastic composition, and on the other side in direct contact with a decorative skin optionally consisting of polyvinyl chloride (PVC), thermoplastic polyolefins (TPO), thermoplastic polyurethane (TPU) or a polyurethane spray skin.

7. Composite components according to Claim 5 or 6, **characterized in that** the reactive polyurethane raw material mixture has a characteristic number of from > 80 to < 125.

8. Composite components according to one of the preceding claims, **characterized in that** component C is chosen from at least one representative from the group consisting of flameproofing agents, flameproofing synergists, smoke-suppressing additives, antidripping agents, internal and external lubricants and mould release agents, flowability auxiliary agents, antistatics, conductivity additives, nucleating agents, stabilizers, antibacterially acting additives, additives which improve scratch resistance, IR absorbents, optical brighteners, fluorescent additives, fillers and reinforcing substances, dyestuffs and pigments, impact modifiers which do not fall under the definition of B.1, and Brønsted acid compounds.

9. Composite components according to one of the preceding claims, produced by a process in which
(i) in a first process step the melt of the thermoplastic composition is injected into a first mould cavity and is subsequently cooled,
(ii) in a second process step the cavity of the injection mould is enlarged and a gap is thereby generated,
(iii) in the third process step a reactive polyurethane raw material mixture comprising
- at least one polyisocyanate component,
- at least one polyfunctional H-active compound, and
- optionally at least one polyurethane additive and/or process auxiliary substance
is injected into the gap resulting in this way between the thermoplastic component and the mould surface of the enlarged cavity, the polyurethane raw material mixture polymerizing completely in direct contact with the surface of the thermoplastic support to give a compact polyurethane layer or to give a polyurethane foam layer,
(iv) in the fourth process step the composite component is removed from the mould cavity, process steps (i) to (iv) following one another directly.

10. Process for the production of a composite component according to one of Claims 1 to 9, **characterized in that**
(i) in a first process step the melt of the thermoplastic composition is injected into a first mould cavity and is subsequently cooled,
(ii) in a second process step the cavity of the injection mould is enlarged and a gap is thereby generated,
(iii) in the third process step a reactive polyurethane raw material mixture comprising
- at least one polyisocyanate component,
- at least one polyfunctional H-active compound, and
- optionally at least one polyurethane additive and/or process auxiliary substance
is injected into the gap resulting in this way between the thermoplastic component and the mould surface of the enlarged cavity, the polyurethane raw material mixture polymerizing completely in direct contact with the surface of the thermoplastic support to give a compact polyurethane layer or to give a polyurethane foam layer,
(iv) in the fourth process step the composite component is removed from the mould cavity, process steps (i) to (iv) following one another directly.

11. Process according to Claim 10, **characterized in that** in process step (iii) the surface of the injection mould in contact with the thermoplastic composition is temperature-controlled at a temperature in the range of 50 to 95 °C and the surface of the injection mould in contact with the reactive polyurethane mixture is temperature-controlled at a temperature in the range of 50 to 160 °C.

12. Use of a composite component according to one of Claims 1 to 9 as an interior or exterior component of a track vehicle, air travel vehicle or motor vehicle.

## Revendications

1. Composants composites, comprenant :
a) un support en une composition thermoplastique contenant :
A) au moins un polymère choisi dans le groupe constitué par les polycarbonates aromatiques, les polyester-carbonates aromatiques et les polyesters aromatiques en une proportion [A] de 30,0 à 64,9 parties en poids, par rapport à la somme des composants A et B,
B) au moins un (co)polymère de vinyle modifié par un caoutchouc en une proportion [B] de 35,1 à 70,0 parties en poids, par rapport à la somme des composants A à C, avec une teneur en caoutchouc [K_{B}] d'au moins 25,0 parties en poids, par rapport au composant B,
et
C) un additif polymère en une proportion [C] de 0 à 30,0 parties en poids, par rapport à la somme des composants A et B, et
b) au moins une couche de polyuréthane,
la composition thermoplastique étant **caractérisée par** une teneur totale en caoutchouc, par rapport à la somme des composants A et B, d'au moins 12 parties en poids.

2. Composants composites selon la revendication 1, **caractérisés en ce que** la composition thermoplastique du support contient :
A) 40,0 à 64,9 parties en poids, par rapport à la somme des composants A et B, d'au moins un polymère choisi dans le groupe constitué par les polycarbonates aromatiques, les polyester-carbonates aromatiques et les polyesters aromatiques,
B) 35,1 à 60 parties en poids, par rapport à la somme des composants A et B, d'au moins un (co)polymère de vinyle modifié par un caoutchouc.

3. Composants composites selon la revendication 2, **caractérisés en ce que** le quotient Q = [B]/[K_{B}] est inférieur à 2, de préférence inférieur à 1,7, de manière particulièrement préférée inférieur à 1,5.

4. Composants composites selon l'une quelconque des revendications 1 à 3, **caractérisés en ce qu'**un mélange d'au moins un polycarbonate et/ou polyester-carbonate aromatique et d'au moins un polyester aromatique est utilisé en tant que composant A.

5. Composants composites selon l'une quelconque des revendications précédentes, **caractérisés en ce que** la couche de polyuréthane est fabriquée par polymérisation d'un mélange de matières premières de polyuréthane réactif contenant :
- au moins un composant polyisocyanate,
- au moins un composé polyfonctionnel à H actif, et
- éventuellement au moins un additif de polyuréthane et/ou un adjuvant de procédé,
en contact direct avec le support formé auparavant à partir de la composition thermoplastique et solidifié.

6. Composants composites selon l'une quelconque des revendications précédentes, **caractérisés en ce que** la couche de polyuréthane est fabriquée par polymérisation d'un mélange de matières premières de polyuréthane réactif contenant :
- au moins un composant polyisocyanate,
- au moins un composé polyfonctionnel à H actif, et
- éventuellement au moins un additif de polyuréthane et/ou un adjuvant de procédé,
d'un côté en contact direct avec le support formé auparavant à partir de la composition thermoplastique et solidifié, et d'un autre côté en contact direct avec un revêtement décoratif constitué au choix par du polychlorure de vinyle (PVC), des polyoléfines thermoplastiques (TPO), du polyuréthane thermoplastique (TPU) ou un revêtement pulvérisé en polyuréthane.

7. Composants composites selon la revendication 5 ou 6, **caractérisés en ce que** le mélange de matières premières de polyuréthane réactif présente un indice caractéristique de > 80 à < 125.

8. Composants composites selon l'une quelconque des revendications précédentes, **caractérisés en ce que** le composant C est choisi parmi au moins un élément du groupe constitué par les agents ignifuges, les synergistes ignifuges, les additifs antifumée, les agents anti-égouttement, les agents lubrifiants et démoulants internes et externes, les adjuvants de fluidité, les antistatiques, les additifs de conductivité, les agents de nucléation, les stabilisateurs, les additifs à activité antibactérienne, les additifs améliorant la résistance aux éraflures, les absorbants IR, les azurants optiques, les additifs fluorescents, les charges et les matières renforçantes, les colorants et les pigments, les modificateurs de la résistance aux impacts qui ne sont pas inclus dans la définition de B.1, et les composés acides de Brönstedt.

9. Composants composites selon l'une quelconque des revendications précédentes, fabriqués par un procédé selon lequel
(i) lors d'une première étape de procédé, la masse fondue de la composition thermoplastique est injectée dans une première cavité d'outil, puis refroidie,
(ii) lors d'une deuxième étape de procédé, la cavité de l'outil de moulage par injection est agrandie, et un espace de fente est ainsi créé,
(iii) lors de la troisième étape de procédé, un mélange de matières premières de polyuréthane réactif contenant :
- au moins un composant polyisocyanate,
- au moins un composé polyfonctionnel à H actif et
- éventuellement au moins un additif de polyuréthane et/ou un adjuvant de procédé,
est injecté dans l'espace de fente ainsi résultant entre le composant thermoplastique et la surface d'outil de la cavité agrandie,
le mélange de matières premières de polyuréthane polymérisant en contact direct avec la surface du support thermoplastique pour former une couche de polyuréthane compacte ou une couche de mousse de polyuréthane,
(iv) lors de la quatrième étape de procédé, le composant composite est démoulé de la cavité de l'outil,
les étapes de procédé (i) à (iv) ayant lieu directement les unes après les autres.

10. Procédé de fabrication d'un composant composite selon l'une quelconque des revendications 1 à 9, **caractérisé en ce que**
(i) lors d'une première étape de procédé, la masse fondue de la composition thermoplastique est injectée dans une première cavité d'outil, puis refroidie,
(ii) lors d'une deuxième étape de procédé, la cavité de l'outil de moulage par injection est agrandie, et un espace de fente est ainsi créé,
(iii) lors de la troisième étape de procédé, un mélange de matières premières de polyuréthane réactif contenant :
- au moins un composant polyisocyanate,
- au moins un composé polyfonctionnel à H actif et
- éventuellement au moins un additif de polyuréthane et/ou un adjuvant de procédé,
est injecté dans l'espace de fente ainsi résultant entre le composant thermoplastique et la surface d'outil de la cavité agrandie,
le mélange de matières premières de polyuréthane polymérisant en contact direct avec la surface du support thermoplastique pour former une couche de polyuréthane compacte ou une couche de mousse de polyuréthane,
(iv) lors de la quatrième étape de procédé, le composant composite est démoulé de la cavité de l'outil,
les étapes de procédé (i) à (iv) ayant lieu directement les unes après les autres.

11. Procédé selon la revendication 10, **caractérisé en ce que** lors de l'étape de procédé (iii), la surface de l'outil de moulage par injection en contact avec la composition thermoplastique est conditionnée à une température dans la plage allant de 50 à 95 °C et la surface de l'outil de moulage par injection en contact avec le mélange de polyuréthane réactif est conditionnée à une température dans la plage allant de 50 à 160 °C.

12. Utilisation d'un composant composite selon l'une quelconque des revendications 1 à 9 en tant que composant intérieur ou extérieur d'un véhicule ferroviaire, aéronautique ou automobile.
